# EUROPEAN PATENT SPECIFICATION

(11) **EP 3 608 540 B1**
(45) Date of publication and mention of the grant of the patent: **19.05.2021**
(21) Application number: 19190880.5
(22) Date of filing: 08.08.2019
(51) Int. Cl.: F04B 35/00, F04B 39/00

(54) **STRUCTURE OF FIXING BEARING OF AIR COMPRESSOR**
BEFESTIGUNGSSTRUKTUR FÜR LAGER EINES LUFTVERDICHTERS
STRUCTURE DE FIXATION DE PALIER DE COMPRESSEUR D'AIR

(30) Priority: 09.08.2018 TW 107127890
(43) Date of publication of application: 12.02.2020
(73) Proprietor: UNIK World Industrial Co., Ltd., 745 Tainan City (TW)
(72) Inventor: Chou, Wen-San, 745 Tainan City (TW)
(74) Representative: Lang, Christian

(56) References cited:
- EP-A1- 2 187 073
- EP-A1- 3 258 572
- DE-U1-202015 101 980
- US-A1- 2004 105 766

## Description

### FIELD OF THE INVENTION

The present invention relates to a bearing fixing structure of an air compressor which avoids an idle rotation of the bearing in the base or a removal of the bearing from the second positioning orifice.

### BACKGROUND OF THE INVENTION

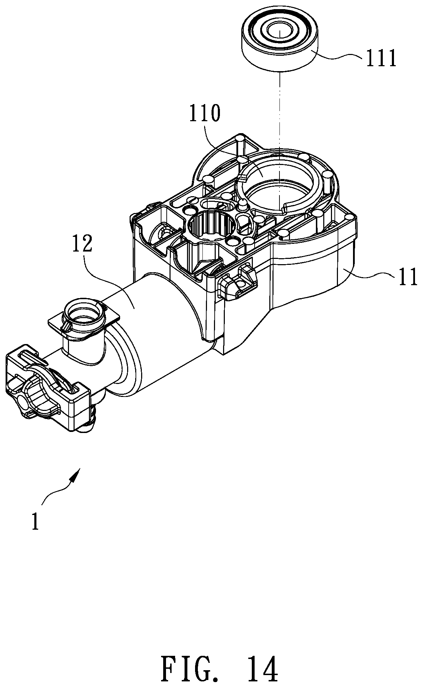

With reference to FIG. 14, a conventional air compressor 1 for a vehicle contains: a base 11, a cylinder 12 connected on the base 11, a motor fixed on the base, and a piston driven by the motor to move in the cylinder 12 reciprocatingly, thus drawing, compressing, pressurizing, and discharging air out of the cylinder.

The motor is driven by a gear mechanism and a crank mechanism so as to actuate the piston to move. The gear mechanism includes a pinion fitted on a central shaft of the motor and a driven gear meshing with the pinion, a counterweight block of the crank mechanism is connected on the driven gear, and a connection post is rotatably connected with the piston. The base 11 includes an orifice 110 configured to accommodate a bearing 111 which is circular, and the connection post is eccentric with a shaft. When the driven gear is actuated by the pinion to rotate, the piston moves in the cylinder 12 reciprocatingly.

However, the base 11 is made of plastic, so it is easy to be softened. The piston pulls the bearing 111 each other to cause deformation, and the piston offset greatly to damage the orifice 110, thus reducing a service life of the piston and the bearing 111.

In order to improve service life of an air compressor, document DE 20 2015 101 980 U1 suggests an air compressor design, in which the bearing and the base are integrally formed from a plastic material. However, in this set-up, if the bearing is damaged, it cannot be replaced.

The present invention has arisen to mitigate and/or obviate the afore-described disadvantages.

### SUMMARY OF THE INVENTION

The primary aspect of the present invention is to provide a structure for fixing a bearing of an air compressor which avoids an idle rotation of the bearing in the base or a removal of the bearing from the second positioning orifice.

Another aspect of the present invention is to provide a structure of fixing a bearing of an air compressor in which the piston operates in the cylinder smoothly, thus prolonging a service life of the air compressor.

### BRIEF DESCRIPTION OF THE DRAWINGS

FIG. 1 is a perspective view showing the assembly of an air compressor according to a preferred embodiment of the present invention.
FIG. 2 is a perspective view showing the exploded components of the air compressor according to the preferred embodiment of the present invention.
FIG. 3 is a cross sectional view showing the assembly of the air compressor according to the preferred embodiment of the present invention.
FIG. 4 is a cross-sectional perspective view showing the assembly of a part of a structure of fixing a bearing of an air compressor according to the preferred embodiment of the present invention.
FIG. 5 is a cross-sectional perspective view showing the exploded components of a part of the structure of fixing the bearing of the air compressor according to the preferred embodiment of the present invention.
FIG. 6 is a side plan view showing the assembly of a part of a structure of fixing a bearing of an air compressor according to another preferred embodiment of the present invention.
FIG. 7 is a side plan view showing the assembly of a part of a structure of fixing a bearing of an air compressor according to another preferred embodiment of the present invention.
FIG. 8 is a perspective view showing the assembly of a part of a structure of fixing a bearing of an air compressor according to another preferred embodiment of the present invention.
FIG. 9 is a side plan view of FIG. 8.
FIG. 10 is a perspective view showing the assembly of a part of a structure of fixing a bearing of an air compressor according to another preferred embodiment of the present invention.
FIG. 11 is a perspective view showing the assembly of a part of a structure of fixing a bearing of an air compressor according to another preferred embodiment of the present invention.
FIG. 12 is a side plan view of FIG. 11.
FIG. 13 is a side plan view showing the assembly of a part of a structure of fixing a bearing of an air compressor according to another preferred embodiment of the present invention.
FIG. 14 is a perspective view showing the exploded components of a conventional air compressor.

### DETAILED DESCRIPTION OF THE PREFERRED EMBODIMENTS

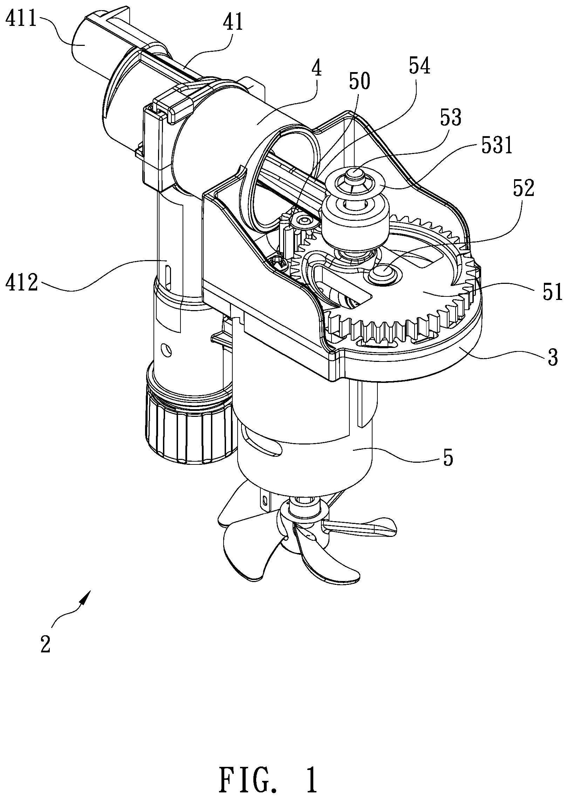

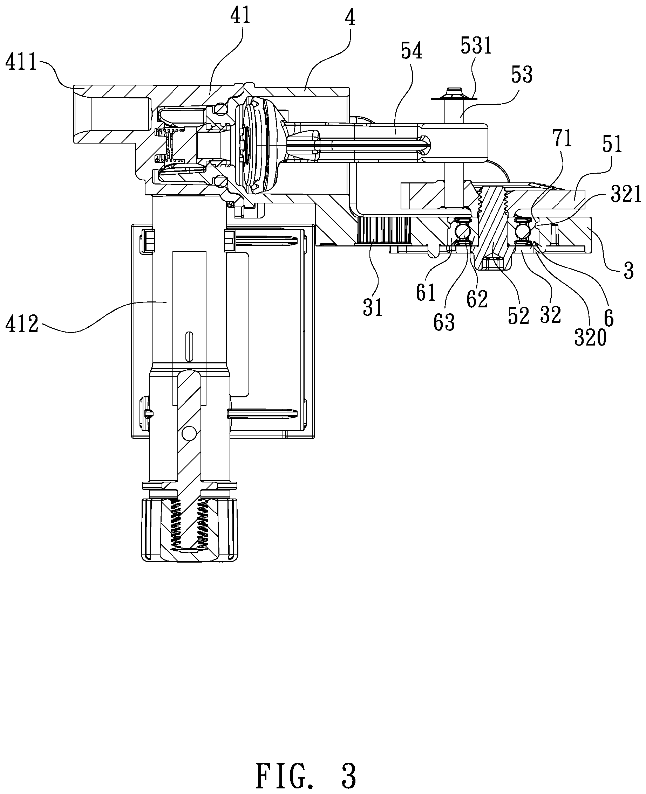

With reference to FIGS. 1-3, a structure of fixing a bearing 6 of an air compressor 2 according to a preferred embodiment of the present invention, the air compressor 2 comprises: a base 3, a cylinder 4 connected on the base 3, a motor 5 and a transmission mechanism 51 which are connected with the base 3.

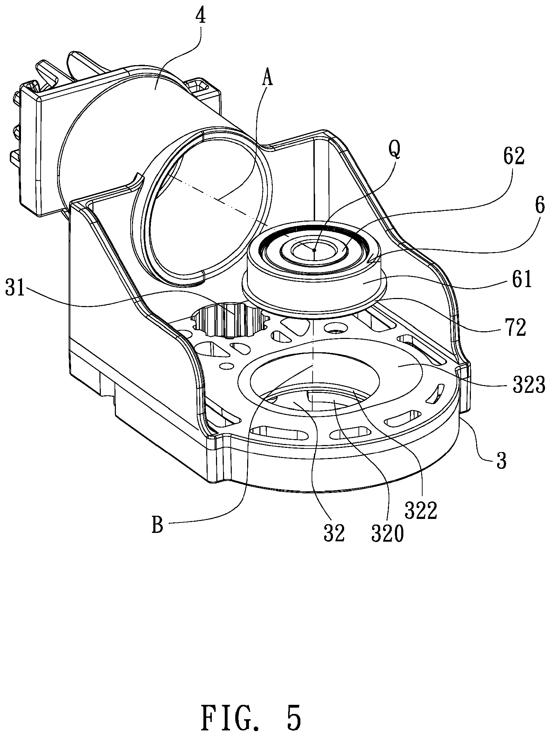

The base 3 includes multiple positioning orifices (i.e., a first positioning orifice 31 and a second positioning orifice 32), wherein the first positioning orifice 31 accommodates a pinion 50 on a core end of the motor 5, the second positioning orifice 32 accommodates the bearing 6, wherein the bearing 6 includes a first ring 61, a second ring 62, and multiple balls 63 defined between the first ring 61 and the second ring 62, wherein the second positioning orifice 32 includes a shoulder 320 formed on a bottom thereof to avoid a removal of the bearing 6 from the second positioning orifice 32, and the second positioning orifice 32 includes a non-circular surrounding face 323 formed around a top thereof so that the bearing 6 is replaced onto the base 3, a central axis A of the cylinder 4 is perpendicular to a longitudinal axis B extending from a center of the second positioning orifice 32 so as to produce an intersection point Q, as shown in FIG. 5. In the meantime, a piston 54 of the cylinder 4 operates normally instead of eccentrically. The non-circular surrounding face 323 facilitates a removal of the bearing 6 from the central axis of the cylinder 4 so that the central axis A is not perpendicular to and is intersected with the longitudinal axis B so that the piston 54 of the cylinder 4 operates eccentrically, thus not producing the intersection point Q.

The cylinder 4 is integrally connected on the base 3, and the cylinder 4 includes an air storage chamber 41 communicating therewith, wherein the air storage chamber 41 has an air outflow pipe 411 configured to output air, and the air storage chamber 41 has a pressure gauge 412.

The transmission mechanism 51 actuates the piston 54 to move in the cylinder 4 reciprocatingly so as to produce compressed air, wherein the transmission mechanism 51 is a gear integrally formed in a powder metallurgy manner and meshing with the pinion 50, wherein the transmission mechanism 51 includes a threaded hole 510 defined on a center thereof and a connection post 53 beside the threaded hole 510, wherein the connection post 53 has a notch 530 defined around a distal end thereof away from the threaded hole 510.

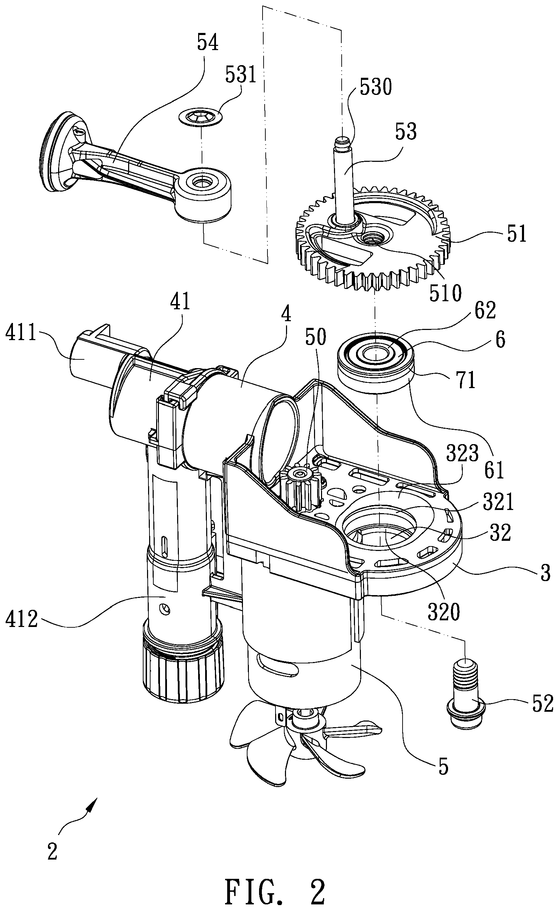

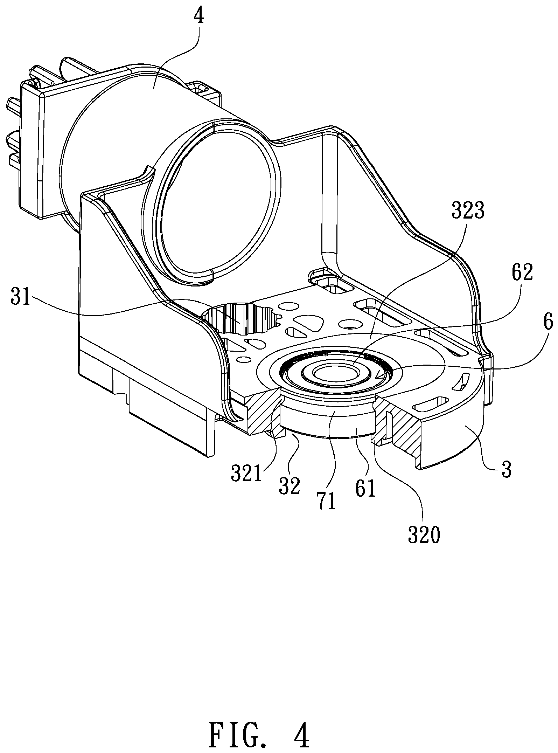

Referring to FIGS. 2-4, the piston 54 is rotatably connected with the connection post 53 of the transmission mechanism 51, a locking disc 531 is retained with the notch 530 of the connection post 53 to avoid a removal of the piston 54 when the transmission mechanism 51 operates. The piston 54 is accommodated into the cylinder 4, the threaded hole 510 of the transmission mechanism 51 corresponds to the second ring 62 of the bearing 6 in the second positioning orifice 32 of the base 3, and a screw bolt 52 is inserted through the second ring 62 of the bearing 6 from the base 3 to screw with the threaded hole 510.

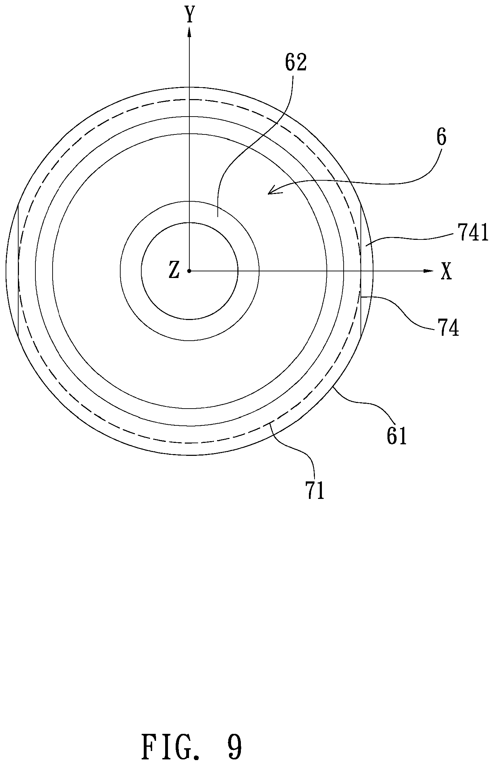

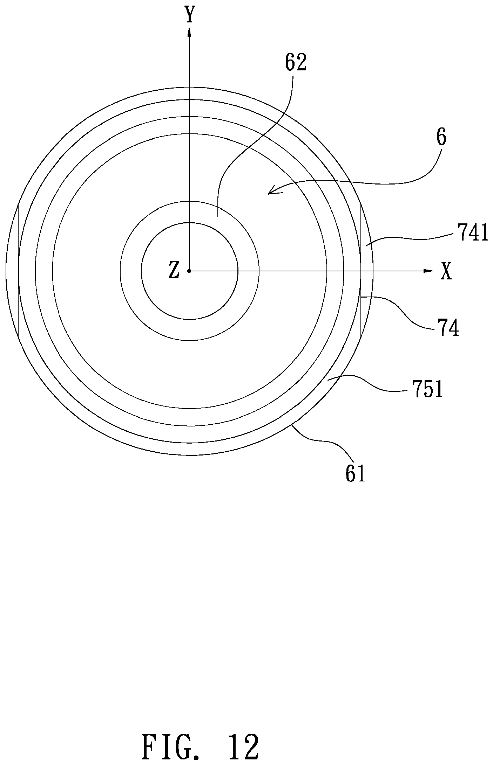

As shown in FIGS. 2-12, the first ring 61 of the bearing 6 is non-circular, and a shape of the second positioning orifice 32 of the base 3 corresponds to the first ring 61 so as to avoid an idle rotation of the bearing 6 in the second positioning orifice 32 of the base 3 or a removal of the bearing 6 from the second positioning orifice 32.

As illustrated in FIGS. 2-4, the first ring 61 of the bearing 6 has a peripheral recess 71 retained with a rib 321 of the second positioning orifice 32, such that the first ring 61 of the bearing 6 is locked, the bearing 6 does not remove when the transmission mechanism 51 operates, and the piston 54 operates in the cylinder 4 smoothly, thus prolonging a service life of the air compressor 2.

With reference to FIG. 5, in another embodiment, the ring 61 of the bearing 6 has a protrusion 72 retained with a trench 322 of the second positioning orifice 32 of the base 3, such that the first ring 61 of the bearing 6 is locked, the bearing 6 does not remove when the transmission mechanism 51 operates, and the piston 54 operates in the cylinder 4 smoothly, thus prolonging the service life of the air compressor 2.

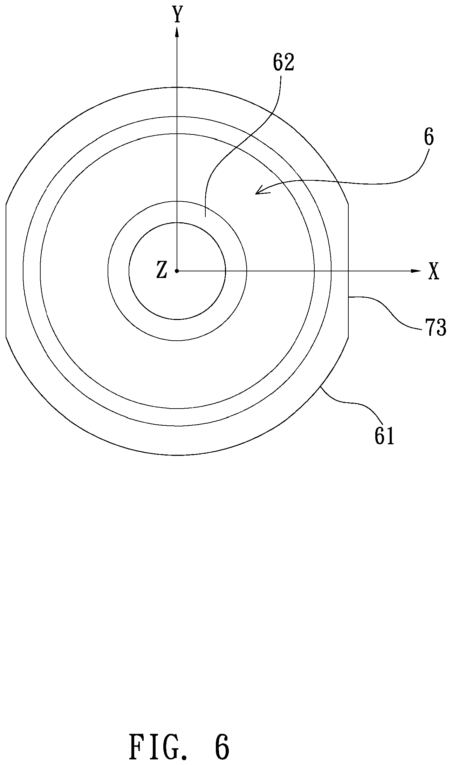

Referring to FIG. 6, in another embodiment, the first ring 61 of the bearing 6 has at least one tangent plane 73 formed on an X axis of a three-dimensional space.

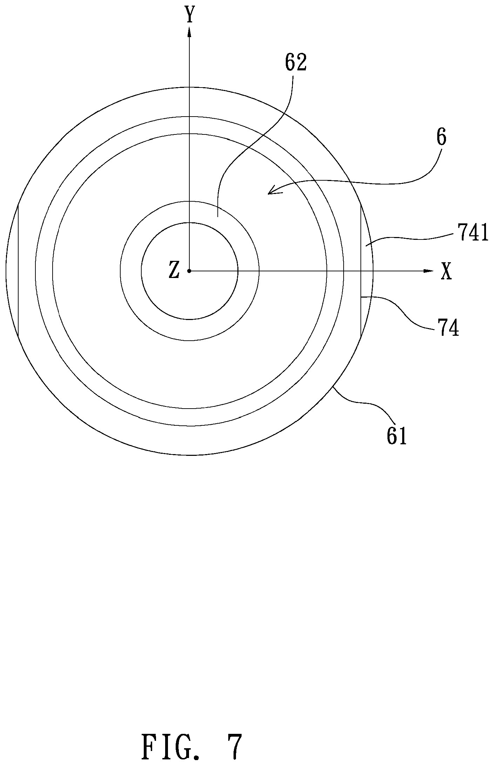

As shown in FIG. 7, in another embodiment, the first ring 61 of the bearing 6 has a partial tangent plane 74 formed on an X axis of a three-dimensional space., i.e., the first ring 61 of the bearing 6 has at least one platform 741 formed on the X axis so that the bearing 6 does not rotate idly in or does not remove from the second positioning orifice 3, when the transmission mechanism 51 operates.

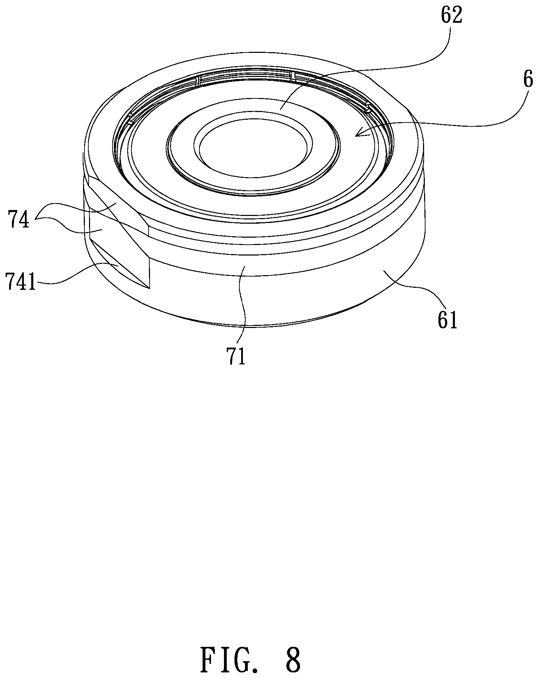

As shown in FIGS. 8-9, in another embodiment, the first ring 61 of the bearing 6 has the peripheral recess 71 retained with the rib 321, the partial tangent plane 74 and the at least one platform 741 which are formed on the X axis of a three-dimensional space.

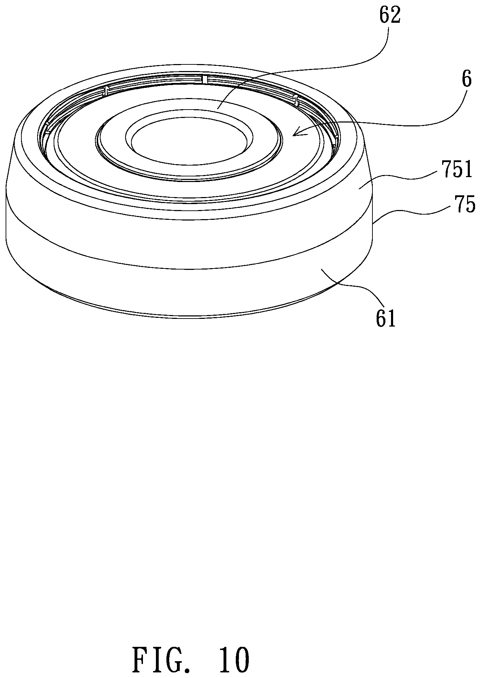

As illustrated in FIG. 10, in another embodiment, the first ring 61 of the bearing 6 has a peripheral face 75 and a beveled face 751 extending from the peripheral face 75, wherein a diameter of the beveled face 751 is less than the peripheral face 75 so that the bearing 6 does not remove from the second positioning orifice 32 of the base 3, when the transmission mechanism 51 operates.

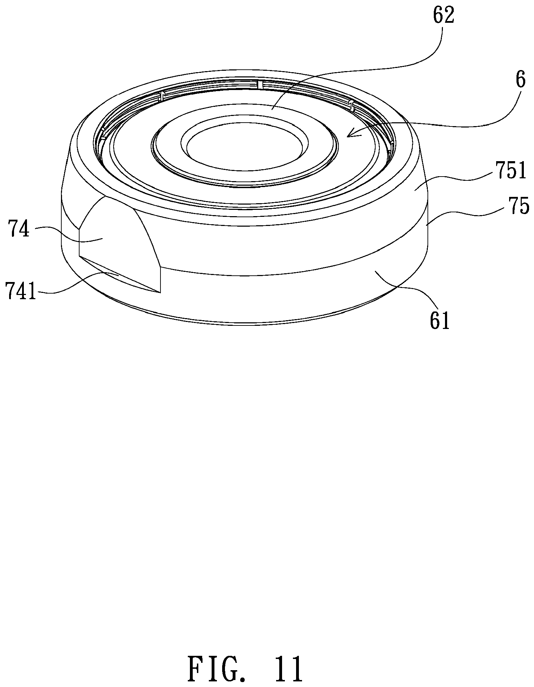

With reference to FIGS. 11-12, in another embodiment, the first ring 61 of the bearing 6 has the peripheral face 75, the beveled face 751, the partial tangent plane 74 and the at least one platform 741 which are formed on the X axis of the three-dimensional space.

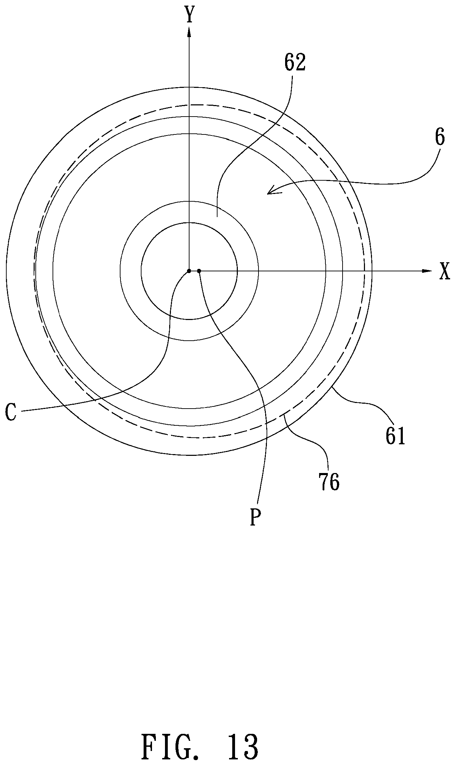

Referring to FIG. 13, the first ring 61 of the bearing 6 has a groove 76, a central axis P of which is not identical to a central axis C of the bearing 6, i.e., the first ring 61 is not concentric with the bearing 6.

Accordingly, the screw bolt 53 of the transmission mechanism 51 is rotatably with the bearing 6, the first ring 61 of bearing 6 is non-circular, and the shape of the second positioning orifice 32 of the base 3 corresponds to the first ring 61 so as to avoid an idle rotation of the bearing 6 in the second positioning orifice 32 of the base 3 or a removal of the bearing 6 from the second positioning orifice 32. Preferably, the piston 54 operates in the cylinder 4 smoothly, thus prolonging the service life of the air compressor 2.

## Claims

1. Air compressor with a bearing (6) including a first ring (61), the air compressor comprising:
a base (3) including multiple positioning orifices (31, 32), wherein the multiple positioning orifices (31, 32) are a first positioning orifice (31) and a second positioning orifice (32), wherein the second positioning orifice (32) accommodates the bearing (6);
a cylinder (4) integrally connected with the base (3) and including an air storage chamber (41) communicating with the cylinder (4); and
a transmission mechanism (51) actuating a piston (54) to move in the cylinder (4) reciprocatingly so as to produce compressed air; whereby
the bearing (6) further includes a second ring (62) and multiple balls (63) defined between the first ring (61) and the second ring (62); and **characterized in that**
the first ring (61) of the bearing (6) is non-circular, and a shape of the second positioning orifice (32) of the base (3) corresponds to the first ring (61), wherein the second positioning orifice (32) further includes a shoulder (320) formed on a bottom thereof, so as to avoid an idle rotation of the bearing (6) in the second positioning orifice (32) of the base (3) or a removal of the bearing (6) from the second positioning orifice (32).

2. Air compressor as claimed in claim 1, wherein the first positioning orifice (31) accommodates a pinion (50) on a core end of the motor (5), wherein the second positioning orifice (32) includes a non-circular surrounding face (323) formed around a top thereof so that the bearing (6) is replaced onto the base (3), a central axis (A) of the cylinder (4) is perpendicular to a longitudinal axis (B) extending from a center of the second positioning orifice (32) so as to produce an intersection point (Q), in the meantime, a piston (54) of the cylinder (4) operates normally, wherein the non-circular surrounding face (323) facilitates a removal of the bearing (6) from the central axis of the cylinder (4) so that the central axis (A) is not perpendicular to and is intersected with the longitudinal axis (B) so that the piston (54) of the cylinder (4) operates eccentrically, thus not producing the intersection point (Q).

3. Air compressor as claimed in claim 1, wherein the transmission mechanism (51) includes a threaded hole (510) defined on a center thereof and a connection post (53) beside the threaded hole (510), the threaded hole (510) of the transmission mechanism (51) corresponds to the second ring (62) of the bearing (6) in the second positioning orifice (32) of the base (3), a screw bolt (52) is inserted through the second ring (62) of the bearing (6) from the base (3) to screw with the threaded hole (510), and the piston (54) is rotatably connected with the connection post (53) of the transmission mechanism (51).

4. Air compressor as claimed in claim 3, wherein the transmission mechanism (51) is a gear integrally formed in a powder metallurgy manner and meshing with the pinion (50).

5. Air compressor as claimed in claim 2, wherein the first ring (61) of the bearing (6) has a peripheral recess (71) retained with a rib (321) of the second positioning orifice (32), such that the first ring (61) of the bearing (6) is locked, the bearing (6) does not remove when the transmission mechanism (51) operates.

6. Air compressor as claimed in claim 2, wherein the first ring (61) of the bearing (6) has a protrusion (72) retained with a trench (322) of the second positioning orifice (32) of the base (3), such that the first ring (61) of the bearing (6) is locked, the bearing (6) does not remove when the transmission mechanism (51) operates.

7. Air compressor as claimed in claim 2, wherein the first ring (61) of the bearing (6) has at least one tangent plane (73) formed on an X axis.

8. Air compressor as claimed in claim 5, wherein the first ring (61) of the bearing (6) has a partial tangent plane (74) formed on an X axis, wherein the first ring (61) of the bearing (6) has at least one platform (741) formed on the X axis so that the bearing (6) does not rotate idly in or does not remove from the second positioning orifice (3), when the transmission mechanism (51) operates.

9. Air compressor as claimed in claim 8, wherein the first ring (61) of the bearing (6) has the peripheral recess (71) retained with the rib (321), and the partial tangent plane (74) and the at least one platform (741) which are formed on the X axis.

10. Air compressor as claimed in claim 8, wherein the first ring (61) of the bearing (6) has a peripheral face (75) and a beveled face (751) extending from the peripheral face (75), wherein a diameter of the beveled face (751) is less than the peripheral face (75) so that the bearing (6) does not remove from the second positioning orifice (32) of the base (3), when the transmission mechanism (51) operates.

11. Air compressor as claimed in claim 10, wherein the first ring (61) of the bearing (6) has the peripheral face (75), the beveled face (751), the partial tangent plane (74) and the at least one platform (741) which are formed on the X axis.

12. Air compressor as claimed in claim 5, wherein the first ring (61) of the bearing (6) has a groove (76), a central axis (P) of which is not identical to a central axis (C) of the bearing (6), and the first ring (61) is not concentric with the bearing (6).

13. Air compressor as claimed in claim 1, wherein the piston (54) is rotatably connected with a connection post (53) of the transmission mechanism (51), a locking disc (531) is retained with a notch (530) of the connection post (53) to avoid a removal of the piston (54), when the transmission mechanism (51) operates.

## Patentansprüche

1. Luftkompressor mit einem Lager (6), das einen ersten Ring (61) aufweist, wobei der Luftkompressor Folgendes umfasst:
eine Basis (3), die mehrere Positionieröffnungen (31, 32) aufweist, wobei die mehreren Positionieröffnungen (31, 32) eine erste Positionieröffnung (31) und eine zweite Positionieröffnung (32) sind, wobei die zweite Positionieröffnung (32) das Lager (6) aufnimmt,
einen Zylinder (4), der integral mit der Basis (3) verbunden ist und eine Luftspeicherkammer (41) aufweist, die mit dem Zylinder (4) in Verbindung steht, und einen Getriebemechanismus (51), der einen Kolben (54) betätigt, um sich in dem Zylinder (4) hin- und herzubewegen, um Druckluft zu erzeugen,
wobei das Lager (6) ferner einen zweiten Ring (62) und mehrere Kugeln (63) aufweist, die zwischen dem ersten Ring (61) und dem zweiten Ring (62) definiert sind, und
**dadurch gekennzeichnet, dass**
der erste Ring (61) des Lagers (6) nicht kreisförmig ist und eine Form der zweiten Positionieröffnung (32) der Basis (3) dem ersten Ring (61) entspricht, wobei die zweite Positionieröffnung (32) ferner eine Schulter (320) aufweist, die an einem unteren Teil davon ausgebildet ist, um eine Leerlaufdrehung des Lagers (6) in der zweiten Positionieröffnung (32) der Basis (3) oder ein Entfernen des Lagers (6) von der zweiten Positionieröffnung (32) zu vermeiden.

2. Luftkompressor nach Anspruch 1, bei welchem die erste Positionieröffnung (31) ein Ritzel (50) an einem Kernende des Motors (5) aufnimmt, wobei die zweite Positionieröffnung (32) eine nicht kreisförmige Umgebungsfläche (323) aufweist, die um ein Oberteil davon ausgebildet ist, sodass das Lager (6) wieder auf die Basis (3) hingelegt wird, wobei eine Mittelachse (A) des Zylinders (4) senkrecht zu einer Längsachse (B) ist, die sich von einer Mitte der zweiten Positionieröffnung (32) erstreckt, um einen Schnittpunkt (Q) zu erzeugen, währenddessen ein Kolben (54) des Zylinders (4) normal arbeitet, wobei die nicht kreisförmige Umgebungsfläche (323) ein Entfernen des Lagers (6) von der Mittelachse des Zylinders (4) erleichtert, sodass die Mittelachse (A) nicht senkrecht zu der Längsachse (B) ist und sich mit dieser überschneidet, sodass der Kolben (54) des Zylinders (4) exzentrisch arbeitet, wodurch kein Schnittpunkt (Q) erzeugt wird.

3. Luftkompressor nach Anspruch 1, bei welchem der Getriebemechanismus (51) eine Gewindebohrung (510), die auf seiner Mitte definiert ist, und eine Verbindungsstange (53) neben der Gewindebohrung (510) aufweist, wobei die Gewindebohrung (510) des Getriebemechanismus (51) dem zweiten Ring (62) des Lagers (6) in der zweiten Positionieröffnung (32) der Basis (3) entspricht, ein Schraubenbolzen (52) durch den zweiten Ring (62) des Lagers (6) von der Basis (3) eingesetzt wird, um sich mit der Gewindebohrung (510) zu verschrauben, und der Kolben (54) drehbar mit der Verbindungsstange (53) des Getriebemechanismus (51) verbunden ist.

4. Luftkompressor nach Anspruch 3, bei welchem der Getriebemechanismus (51) ein Zahnrad ist, das in einer pulvermetallurgischen Art integral ausgebildet ist und mit dem Ritzel (50) kämmt.

5. Luftkompressor nach Anspruch 2, bei welchem der erste Ring (61) des Lagers (6) eine Umfangsaussparung (71) aufweist, die mit einer Rippe (321) der zweiten Positionieröffnung (32) gehalten wird, sodass der erste Ring (61) des Lagers (6) verriegelt ist, wobei das Lager (6) nicht entfernt wird, wenn der Getriebemechanismus (51) arbeitet.

6. Luftkompressor nach Anspruch 2, bei welchem der erste Ring (61) des Lagers (6) einen Vorsprung (72) aufweist, der mit einer Vertiefung (322) der zweiten Positionieröffnung (32) der Basis (3) gehalten wird, sodass der erste Ring (61) des Lagers (6) verriegelt ist, wobei das Lager (6) nicht entfernt wird, wenn der Getriebemechanismus (51) arbeitet.

7. Luftkompressor nach Anspruch 2, bei welchem der erste Ring (61) des Lagers (6) mindestens eine Tangentialebene (73) aufweist, die auf einer X-Achse ausgebildet ist.

8. Luftkompressor nach Anspruch 5, bei welchem der erste Ring (61) des Lagers (6) eine partielle Tangentialebene (74) aufweist, die auf einer X-Achse ausgebildet ist, wobei der erste Ring (61) des Lagers (6) mindestens eine Plattform (741) aufweist, die auf der X-Achse ausgebildet ist, sodass sich das Lager (6) nicht im Leerlauf in der zweiten Positionieröffnung (3) dreht oder nicht von dieser entfernt wird, wenn der Getriebemechanismus (51) arbeitet.

9. Luftkompressor nach Anspruch 8, bei welchem der erste Ring (61) des Lagers (6) die Umfangsaussparung (71), die mit der Rippe (321) gehalten wird, und die partielle Tangentialebene (74) und die mindestens eine Plattform (741) aufweist, die auf der X-Achse ausgebildet sind.

10. Luftkompressor nach Anspruch 8, bei welchem der erste Ring (61) des Lagers (6) eine Umfangsfläche (75) und eine abgeschrägte Fläche (751) aufweist, die sich von der Umfangsfläche (75) erstreckt, wobei ein Durchmesser der abgeschrägten Fläche (751) kleiner als die Umfangsfläche (75) ist, sodass das Lager (6) nicht von der zweiten Positionieröffnung (32) der Basis (3) entfernt wird, wenn der Getriebemechanismus (51) arbeitet.

11. Luftkompressor nach Anspruch 10, bei welchem der erste Ring (61) des Lagers (6) die Umfangsfläche (75), die abgeschrägte Fläche (751), die partielle Tangentialebene (74) und die mindestens eine Plattform (741) aufweist, die auf der X-Achse ausgebildet sind.

12. Luftkompressor nach Anspruch 5, bei welchem der erste Ring (61) des Lagers (6) eine Nut (76) aufweist, deren Mittelachse (P) nicht mit einer Mittelachse (C) des Lagers (6) identisch ist, und der erste Ring (61) nicht konzentrisch mit dem Lager (6) ist.

13. Luftkompressor nach Anspruch 1, bei welchem der Kolben (54) drehbar mit einer Verbindungsstange (53) des Getriebemechanismus (51) verbunden ist und eine Verriegelungsscheibe (531) mit einer Kerbe (530) der Verbindungsstange (53) gehalten wird, um ein Entfernen des Kolbens (54) zu vermeiden, wenn der Getriebemechanismus (51) arbeitet.

## Revendications

1. Compresseur d'air avec un palier (6) incluant un premier anneau (61), le compresseur d'air comprenant:
une base (3) incluant de multiples orifices de positionnement (31, 32), dans lequel les multiples orifices de positionnement (31, 32) sont un premier orifice de positionnement (31) et un second orifice de positionnement (32), dans lequel le second orifice de positionnement (32) loge le palier (6);
un cylindre (4) raccordé d'un seul tenant à la base (3) et incluant une chambre de stockage d'air (41) communiquant avec le cylindre (4); et
un mécanisme de transmission (51) actionnant un piston (54) pour le déplacement dans le cylindre (4) alternativement de sorte à produire de l'air compressé; selon lequel le palier (6) inclut en outre un second anneau (62) et de multiples billes (63) définies entre le premier anneau (61) et le second anneau (62); et
**caractérisé en ce que**
le premier anneau (61) du palier (6) est non circulaire, et une forme du second orifice de positionnement (32) de la base (3) correspond au premier anneau (61), dans lequel le second orifice de positionnement (32) inclut en outre un épaulement (320) formé sur un fond de celui-ci de sorte à éviter une rotation à vide du palier (6) dans le second orifice de positionnement (32) de la base (3) ou un retrait du palier (6) du second orifice de positionnement (32).

2. Compresseur d'air selon la revendication 1, dans lequel le premier orifice de positionnement (31) loge un pignon (50) sur une extrémité de noyau de moteur (5), dans lequel le second orifice de positionnement (32) inclut une face environnante non circulaire (323) formée autour d'un dessus de celui-ci de sorte que le palier (6) soit replacé sur la base (3), un axe central (A) du cylindre (4) est perpendiculaire à un axe longitudinal (B) s'étendant depuis un centre du second orifice de positionnement (32) de sorte à produire un point d'intersection (Q), entre-temps, un piston (54) du cylindre (4) fonctionne normalement, dans lequel la face environnante non circulaire (323) facilite un retrait du palier (6) de l'axe central du cylindre (4) de sorte que l'axe central (A) ne soit pas perpendiculaire à et soit croisé avec l'axe longitudinal (B) de sorte que le piston (54) du cylindre (4) fonctionne de manière excentrique, ne produisant ainsi pas le point d'intersection (Q).

3. Compresseur d'air selon la revendication 1, dans lequel le mécanisme de transmission (51) inclut un trou fileté (510) défini sur un centre de celui-ci et un montant de liaison (53) à côté du trou fileté (510), le trou fileté (510) du mécanisme de transmission (51) correspond au second anneau (62) du palier (6) dans le second orifice de positionnement (32) de la base (3), un boulon fileté (52) est inséré à travers le second anneau (62) du palier (6) depuis la base (3) pour le vissage avec le trou fileté (510), et le piston (54) est raccordé de manière à pouvoir tourner avec le montant de liaison (53) du mécanisme de transmission (51).

4. Compresseur d'air selon la revendication 3, dans lequel le mécanisme de transmission (51) est un engrenage formé d'un seul tenant à la manière de la métallurgie des poudres et s'engrenant avec le pignon (50).

5. Compresseur d'air selon la revendication 2, dans lequel le premier anneau (61) du palier (6) présente un évidement périphérique (71) retenu avec une nervure (321) du second orifice de positionnement (32) de sorte que le premier anneau (61) du palier (6) soit verrouillé, le palier (6) ne se retire pas lorsque le mécanisme de transmission (51) fonctionne.

6. Compresseur d'air selon la revendication 2, dans lequel le premier anneau (61) du palier (6) présente une saillie (72) retenue avec une tranchée (322) du second orifice de positionnement (32) de la base (3) de sorte que le premier anneau (61) du palier (6) soit verrouillé, le palier (6) ne se retire pas lorsque le mécanisme de transmission (51) fonctionne.

7. Compresseur d'air selon la revendication 2, dans lequel le premier anneau (61) du palier (6) présente au moins un plan tangent (73) formé sur un axe X.

8. Compresseur d'air selon la revendication 5, dans lequel le premier anneau (61) du palier (6) présente un plan tangent partiel (74) formé sur un axe X, dans lequel le premier anneau (61) du palier (6) présente au moins une plateforme (741) formée sur l'axe X de sorte que le palier (6) ne tourne pas à vide dans ou ne se retire pas du second orifice de positionnement (3) lorsque le mécanisme de transmission (51) fonctionne.

9. Compresseur d'air selon la revendication 8, dans lequel le premier anneau (61) du palier (6) présente l'évidement périphérique (71) retenu avec la nervure (321), et le plan tangent partiel (74) et l'au moins une plateforme (741) qui sont formés sur l'axe X.

10. Compresseur d'air selon la revendication 8, dans lequel le premier anneau (61) du palier (6) présente une face périphérique (75) et une face biseautée (751) s'étendant depuis la face périphérique (75), dans lequel un diamètre de la face biseautée (751) est inférieur à la face périphérique (75) de sorte que le palier (6) ne se retire pas du second orifice de positionnement (32) de la base (3), lorsque le mécanisme de transmission (51) fonctionne.

11. Compresseur d'air selon la revendication 10, dans lequel le premier anneau (61) du palier (6) présente la face périphérique (75), la face biseautée (751), le plan tangent partiel (74) et l'au moins une plateforme (741) qui sont formés sur l'axe X.

12. Compresseur d'air selon la revendication 5, dans lequel le premier anneau (61) du palier (6) présente une rainure (76), dont un axe central (P) n'est pas identique à un axe central (C) du palier (6), et le premier anneau (61) n'est pas concentrique avec le palier (6).

13. Compresseur d'air selon la revendication 1, dans lequel le piston (54) est raccordé de manière à pouvoir tourner à un montant de liaison (53) du mécanisme de transmission (51), un disque de verrouillage (531) est retenu avec une encoche (530) du montant de liaison (53) pour éviter un retrait du piston (54) lorsque le mécanisme de transmission (51) fonctionne.
